# EUROPEAN PATENT APPLICATION

(11) **EP 4 618 277 A1**
(43) Date of publication of application: **17.09.2025**
(21) Application number: 24894346.6
(22) Date of filing: 23.09.2024
(51) Int. Cl.: H01M 50/24, H01M 10/04, H01M 50/502, H01M 50/593

(54) **BATTERY MODULE FOR DELAYING THERMAL RUNAWAY AND BATTERY PACK INCLUDING SAME**

(30) Priority: 20.11.2023 KR 20230160319
(71) Applicant: LG Energy Solution, Ltd., Seoul 07335 (KR)
(72) Inventor: JANG, Sungman, Daejeon 34122 (KR)
(74) Representative: Plasseraud IP
(86) International application number: PCT/KR2024/014306
(87) International publication number: WO 2025/110450

(57) **Abstract**

A battery module includes a battery cell stack, a module case, and an end plate. The battery cell stack has a plurality of battery cells being stacked. The module case accommodates the battery cell stack and the end plate is disposed on one side of the module case. A flame-retardant paint is applied to at least a portion of the end plate.

## Description

### [TECHNICAL FIELD]

The present disclosure relates to a battery module and a battery pack including the battery module, and more specifically, to a battery module for delaying thermal runaway and a battery pack including the battery module.

### [BACKGROUND ART]

Unlike primary batteries, which cannot be recharged, secondary batteries refer to batteries that may be charged and discharged, and they are applied not only to portable devices but also to electric vehicles ("EVs") and hybrid vehicles ("HEVs") that are driven by an electrical drive source.

Types of secondary batteries currently in wide use may include lithium ion batteries, lithium polymer batteries, nickel cadmium batteries, nickel hydrogen batteries, and nickel zinc batteries. An operating voltage of such a unit secondary battery cell, that is, a unit battery cell, is approximately 2.5V to 4.6V. Accordingly, when a higher output voltage is required, a battery pack is formed by connecting multiple battery cells in series. Additionally, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

When configuring a battery pack by connecting a plurality of battery cells in series/parallel, generally, a battery module consisting of at least one battery cell, preferably a plurality of battery cells, is first constructed, and a battery pack is constructed by using at least one such battery module and adding other components. Here, the battery module refers to a component in which multiple battery cells are connected in series or parallel, and the battery pack refers to a component in which multiple battery modules are connected in series or parallel to increase capacity, output and the like.

However, in these battery packs, if there is overcharge and the like, explosion or fire may occur due to swelling of the battery module, and such explosion or fire may cause greater danger, even leading to loss of life.

In the case of thermal runaway of the battery pack, gas and particles generated from the module may cause an external short circuit of an adjacent module, and a heat transfer rate may accelerate accordingly.

### [DESCRIPTION OF THE DISCLOSURE]

### [TECHNICAL OBJECTIVES]

The present disclosure is intended to solve the problems described above, and is directed to providing a battery module for delaying thermal runaway, and a battery pack including the battery module.

### [TECHNICAL MEANS]

According to an aspect of the present disclosure, a battery module for delaying thermal runaway includes: a battery cell stack in which a plurality of battery cells are stacked; a module case configured to accommodate the battery cell stack; and an end plate disposed on one side of the module case, wherein a flame-retardant paint is applied to at least a portion of the end plate.

Furthermore, the end plate may include a terminal opening.

Furthermore, the flame-retardant paint may be applied around the terminal opening in the end plate.

Furthermore, the battery module for delaying thermal runaway may further include a terminal busbar, and one end portion of the terminal busbar may be exposed through the terminal opening.

Furthermore, the battery module for delaying thermal runaway may further include a busbar frame disposed on one side of the battery cell stack.

Furthermore, the terminal busbar may be disposed at the busbar frame.

Furthermore, the battery module for delaying thermal runaway may further include an insulating cover disposed outside of the busbar frame.

Furthermore, the insulating cover may include an opening through which the terminal busbar is exposed.

Furthermore, the flame-retardant paint may be applied to a front portion of the end plate.

According to an aspect of the present disclosure, a battery module for delaying thermal runaway includes: a battery cell stack in which a plurality of battery cells are stacked; a module case configured to accommodate the battery cell stack; and an end plate disposed on one side of the module case, wherein a heat-resistant paint is applied to at least a portion of the end plate.

Furthermore, the heat-resistant paint may be applied around the terminal opening in the end plate.

Furthermore, the heat-resistant paint may be applied to a front portion of the end plate.

### [ADVANTAGEOUS EFFECTS]

A battery module and a battery pack including the battery module according to an aspect of the present disclosure have the effect of delaying or preventing occurrence of an external short circuit in an adjacent module due to gas and particles generated in the battery module during thermal runaway, thereby delaying thermal runaway.

### [BRIEF DESCRIPTION OF THE DRAWINGS]

FIG. 1 is a perspective view illustrating a battery module according to an aspect of the present disclosure,
FIG. 2 is an exploded perspective view illustrating a battery module according to an aspect of the present disclosure,
FIG. 3 is a perspective view illustrating a battery cell according to an aspect of the present disclosure,
FIG. 4 is a perspective view illustrating a terminal busbar according to an aspect of the present disclosure,
FIG. 5 is a perspective view illustrating an insulating cover and an end plate according to an aspect of the present disclosure,
FIG. 6 is a perspective view illustrating an end plate according to an aspect of the present disclosure,
FIG. 7 is a front view illustrating an end plate according to an aspect of the present disclosure, and
FIG. 8 is a perspective view illustrating an end plate according to another aspect of the present disclosure.

### [DETAILED DESCRIPTION]

The advantages and features of the present disclosure and methods for achieving them will become clear by referring to the aspects described in detail below along with the accompanying drawings. However, the present disclosure is not limited to the aspects disclosed below and will be implemented in various different forms, the present aspects only serve to ensure that the disclosure of the present disclosure is complete, it is provided to fully inform those who have common knowledge in the technical field to which the present disclosure pertains, and the present disclosure is to be only defined by the scope of the claims. Accordingly, in some aspects, well-known process steps, well-known device structures, and well-known techniques are not specifically described in order to avoid ambiguous interpretation of the present disclosure. Like reference numerals refer to like elements throughout the specification.

In order to clearly express multiple layers and areas in the drawing, the thickness may be enlarged. Throughout the specification, similar parts are given the same reference numerals. When a portion of a layer, film, region, plate and the like is said to be "on" another part, this includes not only being "directly on" another part, but also cases where there is another portion therebetween. Conversely, when a portion is said to be "directly on" another part, it means that there is no other portion therebetween. Additionally, when a portion of a layer, film, region, plate and the like is said to be "beneath" another part, this includes not only cases where it is "directly beneath" another part, but also cases where there is another portion therebetween. Conversely, when a portion is said to be "directly beneath" another part, it means that there is no other portion therebetween.

A battery module 1000 according to an aspect of the present disclosure will be described in detail with reference to the drawings.

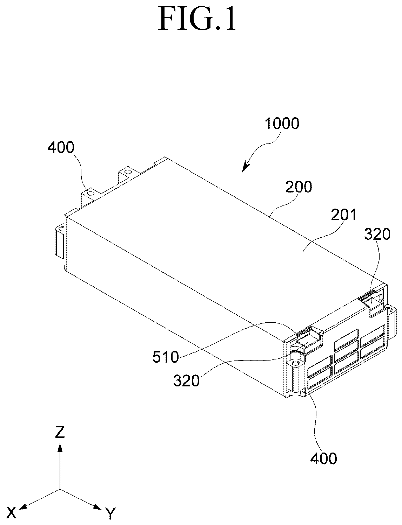

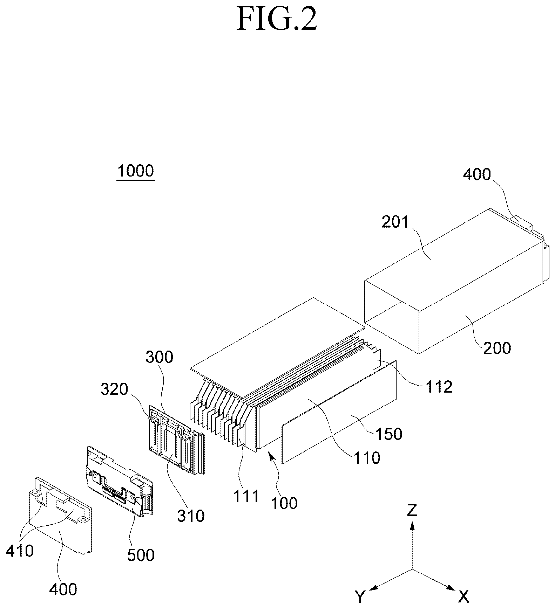

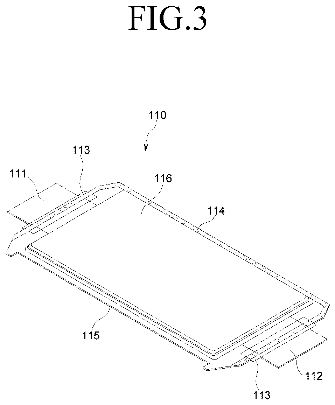

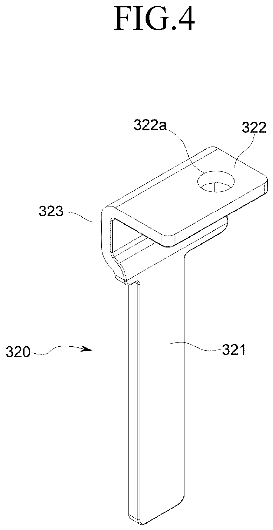

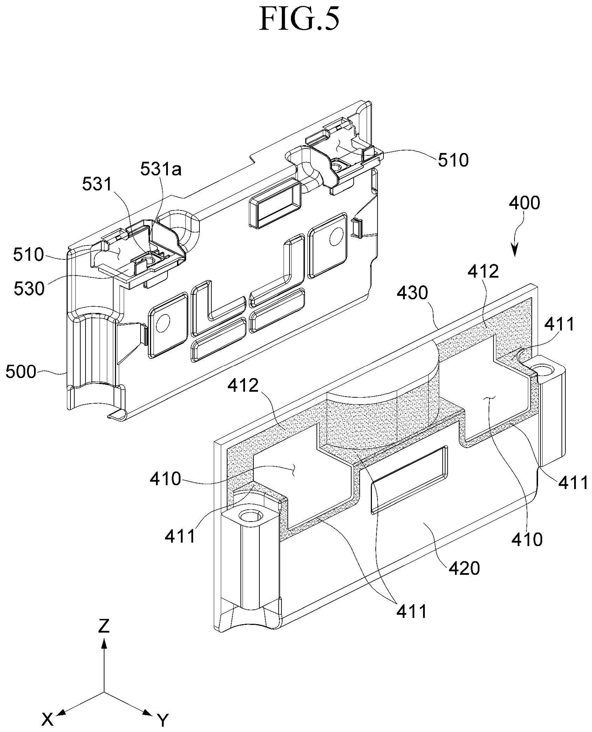

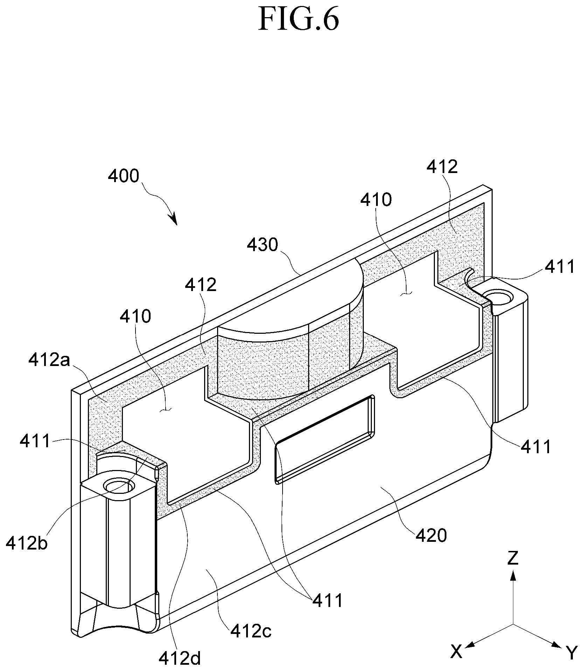

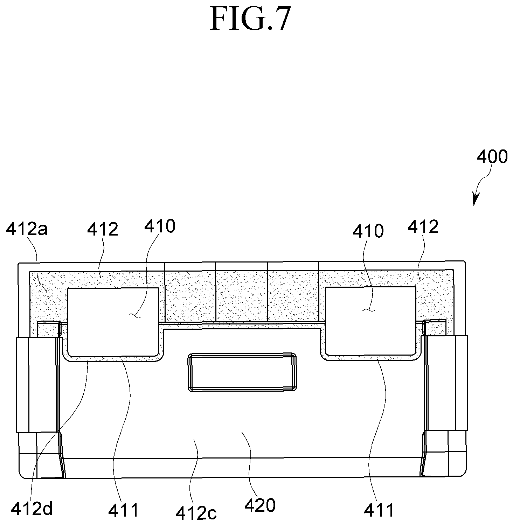

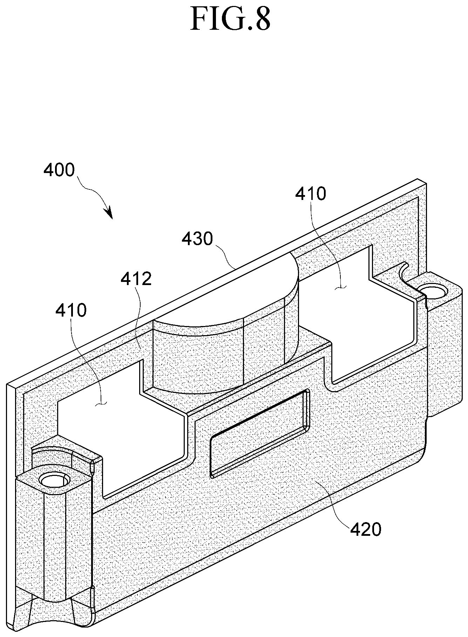

FIG. 1 is a perspective view illustrating a battery module according to an aspect of the present disclosure, FIG. 2 is an exploded perspective view illustrating a battery module according to an aspect of the present disclosure, FIG. 3 is a perspective view illustrating a battery cell according to an aspect of the present disclosure, FIG. 4 is a perspective view illustrating a terminal busbar according to an aspect of the present disclosure, FIG. 5 is a perspective view illustrating an insulating cover and an end plate according to an aspect of the present disclosure, FIG. 6 is a perspective view illustrating an insulating cover according to an aspect of the present disclosure, FIG. 7 is a perspective view that an insulating cover and an end plate are coupled on opposite sides of a battery cell stack according to an aspect of the present disclosure, and FIG. 8 is a view illustrating a state in which an insulating cover is coupled to a busbar frame according to an aspect of the present disclosure.

The battery module 1000 according to an aspect of the present disclosure may include a battery cell stack 100 in which a plurality of battery cells 110 are stacked, a module case 200 configured to accommodate the battery cell stack 100, a busbar frame 300 disposed on one surface and/or another surface of the battery cell stack 100, an insulating cover 500 disposed outside of the busbar frame 300, and an end plate 400 disposed outside of the insulating cover 500.

The battery cell stack 100 may be formed by stacking the plurality of battery cells 110 along a direction, and the plurality of battery cells 110 may be electrically connected to each other. The direction in which the plurality of battery cells 110 are stacked may be an X-axis direction or a -X-axis direction in FIG. 2.

A direction from a front surface to a rear surface of the battery cell stack 100, or an opposite direction thereto, may be defined as a longitudinal direction of the battery cell stack 100, and may be a Y-axis direction in the drawing. In addition, a direction from an upper surface to a lower surface of the battery cell stack 100, or an opposite direction thereto, may be defined as a width direction of the battery cell stack 100, and may be a Z-axis direction in the drawing.

The longitudinal direction of the battery cell stack 100 may be substantially the same as a longitudinal direction of the battery cell 110. Electrode leads 111, 112 of the battery cell 110 may be disposed on the front surface and the rear surface of the battery cell stack 100, and the busbars 310, 320 of the battery module 1000 may be disposed close to the front surface and the rear surface of the battery cell stack 100 to readily form an electrical connection with the electrode leads 111, 112.

The battery cell 110 may be provided as a pouch-type battery cell, and the number of battery cells stacked per unit area may be maximized in the pouch-type battery cell. However, the battery cell 110 does not necessarily have to be provided in a pouch-type, and may be provided in a polygonal, cylindrical, or other various shapes.

The battery cell 110 provided in a pouch-type may include an electrode assembly and a cell case 115 accommodating the electrode assembly see FIG. 3.

The cell case 115 of the battery cell 110 may be a pouch-type cell case 115 for accommodating the electrode assembly. The cell case 115 may include a lower case and an upper case covering the lower case, and the upper and lower cases may be formed unitarily as one piece. In addition, as illustrated in FIG. 3, connecting portions of the upper and lower cases may be formed in a structure in which they are bent and folded. In addition, as illustrated, the upper case may completely cover the lower case, and a sealing portion 114 may be formed in a peripheral area.

The upper and lower cases may both be formed in a laminate structure including an inner cover layer, a metal layer, and an outer cover layer. The inner cover layer which is located at the inner side the cell case 115 with respect to the metal layer may be required to have insulation and electrolytic resistance because it directly contacts the electrode assembly and to have sealing properties to be sealed from the outside, that is, a sealing portion where inner layers are thermally provided should have excellent thermal bonding strength. The metal layer located between the inner cover layer and the outer cover layer serves as a barrier layer that prevents moisture or various gases from penetrating into the battery from the outside, and a preferable material for the metal layer in contact with the inner cover layer may use an aluminum (Al) thin film that is lightweight and has excellent formability. The outer cover layer is located at the outer side of the cell case 115 with respect to the metal layer, and the outer cover layer may use a heat-resistant polymer with excellent characteristics in terms of tensile strength, moisture permeability, and air permeability to protect the electrode assembly while ensuring heat resistance and chemical resistance, and for example, nylon or polyethylene terephthalate may be used.

An accommodation recess 116 may be formed in each of the upper and lower cases, and the electrode assembly may be accommodated in the accommodation recess 116 of the upper and lower cases.

The electrode assembly accommodated in the cell case 115 may be one of the group consisting of a jelly-roll type electrode assembly having a structure in which a separator is disposed between elongated sheet-shaped anode and cathode and then rolled up, a stack type electrode assembly consisting of unit cells having a structure in which rectangular anode and cathode are stacked with a separator disposed therebetween, a stack-folding type electrode assembly in which unit cells are rolled up by an elongated separator film, and a lamination-stack type electrode assembly in which unit cells are stacked with a separator disposed therebetween and provided to each other.

In addition, the electrode assembly may include two electrode tabs and two electrode leads 111, 112 connected to the electrode tabs, respectively, by a welding portion.

One electrode lead 111 or 112 of the two electrode leads 111, 112 may be an anode (positive) lead connected to an anode tab, and the other electrode lead 111 or 112 may be a cathode (negative) lead connected to a cathode tab.

A lead film 113 may be attached to each of the electrode leads 111, 112. The lead film 113 coupled to the electrode leads 111, 112 may be disposed between the electrode leads 111, 112 and the cell case 115 to prevent a short circuit from occurring between the electrode leads 111, 112 and the cell case 115 and to improve sealing force, thereby preventing leakage of an electrolyte and the like.

Although the two electrode leads 111, 112 are illustrated as being disposed on opposite sides of the electrode assembly, respectively, the two electrode leads 111, 112 may be disposed on only one side of the electrode assembly depending on the arrangement of the electrode tabs.

The module case 200 may be configured to protect the battery cell stack 100 and electrical components connected thereto from external physical impact, and the module case 200 may accommodate the battery cell stack 100 and the electrical components connected thereto in an internal space of the module case 200.

A structure of the module case 200 may vary, and for example, the structure of the module case 200 may be a mono-frame structure. Here, the mono-frame may be in the form of a metal plate in which an upper surface, a lower surface, and opposite side surfaces are unitarily formed. The mono-frame may be manufactured by extrusion molding. As another example, the module case 200 may have a structure in which a U-shaped frame and an upper plate upper surface 201 are coupled to each other. In the case of the structure in which the U-shaped frame and the upper plate are coupled to each other, the structure of the module case 200 may be formed by coupling the upper plate onto an upper side of the U-shaped frame which is a metal plate where a lower surface and opposite side surfaces are coupled to each other or unitarily formed, and each frame or plate may be manufactured by press molding. In addition, the structure of the module case 200 may be provided as an L-shaped frame structure in addition to the mono-frame or the U-shaped frame, and may be provided as various structures not described in the above-described examples.

The structure of the module case 200 may be provided in the form that is open along the longitudinal direction of the battery cell stack 100. The front surface and the rear surface of the battery cell stack 100 may not be covered by the module case 200. The electrode leads 111, 112 of the battery cell 110 may not be covered by the module case 200. The front surface and the rear surface of the battery cell stack 100 may be covered by the busbar frame 300, the end plate 400, or the busbars 310, 320 to be described below, and accordingly, the front surface and the rear surface of the battery cell stack 100 may be protected from external physical impacts and the like.

A compression pad 150 may be disposed between the battery cell stack 100 and one side surface of inner surfaces of the module case 200.

The compression pad 150 may be disposed so as to face the battery cell 110 located at an outermost side of the battery cell stack 100 in the X-axis direction in the drawing.

Also, although not illustrated, a thermally conductive resin may be injected between the battery cell stack 100 and the inner surface of the module case 200, and a thermally conductive resin layer not illustrated may be formed between the battery cell stack 100 and one surface of the inner surfaces of the module case 200 by the injected thermally conductive resin. In such a case, the thermally conductive resin layer may be disposed on the Z-axis of the battery cell stack 100, and the thermally conductive resin layer may be formed between the battery cell stack 100 and the bottom surface of the module case 200 on the -Z-axis.

The busbar frame 300 may be disposed on one surface of the battery cell stack 100 and may cover one surface of the battery cell stack 100 while guiding connection between the battery cell stack 100 and an external device. Specifically, the busbar frame 300 may be disposed on the front surface or the rear surface of the battery cell stack 100, as illustrated, or may be disposed on an upper surface, a lower surface or a side surface. At least one of the busbars 310, 320 and a module connector may be provided on the busbar frame 300. As illustrated in FIG. 2, one surface of the busbar frame 300 may be connected to one surface or another surface of the battery cell stack 100, and another surface of the busbar frame 300 may be connected to the busbars 310, 320.

The busbar frame 300 may include an electrically insulating material. The busbar frame 300 may restrict the busbars 310, 320 from contacting other portions of the battery cells 110 other than a portion where the busbars 310, 320 are connected to the electrode leads 111, 112 and may prevent an electrical short circuit from occurring.

The busbar frame 300 may be disposed on each of one side and another side of the battery cell stack 100.

The busbars 310, 320 may be provided on a busbar mounting portion 340 on one surface of the busbar frame 300 and may serve to electrically connect the battery cell stack 100 or the battery cells 110 to an external device circuit. The busbars 310, 320 may include a plurality of busbars, and may be disposed between the battery cell stack 100 or the busbar frame 300 and the end plate 400, thereby being protected from external impacts and the like and minimizing degradation of durability due to external moisture and the like.

The busbars 310, 320 may be electrically connected to the battery cell stack 100 through the electrode leads 111, 112 of the battery cell 110.

Specifically, the electrode leads 111, 112 of the battery cell 110 may be bent and connected to the busbars 310, 320 after passing through a lead slit formed in the busbar frame 300. As illustrated in FIG. 2, the electrode leads 111, 112 of the battery cell 110 may be connected to opposite sides of the busbars 310, 320, and the electrode lead 111 connected to one side of the busbars 310, 320 may be an anode lead, and the electrode lead 112 connected to another side of the busbars 310, 320 may be a cathode lead.

The battery cells 110 constituting the battery cell stack 100 may be connected in series or in parallel by the busbars 310, 320.

The busbars 310, 320 may include a terminal busbar 320 configured to electrically connect one battery module 100 to another battery module 100. At least a portion of the terminal busbar 320 may be exposed to the outside of the end plate 400 to be connected to another battery module 100, and to this end, the end plate 400 may have a terminal opening 410.

The terminal busbar 320 may have one end portion (a second portion 322) exposed to the outside of the module 1000 through an opening 510 of the insulating cover 500 and the terminal opening 410 of the end plate 400.

As illustrated in FIG. 4, the terminal busbar 320 may include a first portion 321 connected to the electrode leads 111, 112 of the battery cell 110 and the second portion 322 exposed to the outside through the terminal opening 410. In addition, the terminal busbar 320 may further include a bending portion 323 formed between the first portion 321 and the second portion 322.

In the terminal busbar 320, the first portion 321 may be connected to the second portion 322 through the bending portion 323, and one surface of the first portion 321 and one surface of the second portion 322 may be perpendicular to each other. That is, by forming the bending portion 323 that is bent in the terminal busbar 320, the second portion 322 may protrude to be mounted on the mounting portion 530 of the insulating cover 500, and the second portion 322 may be electrically connected to a pack busbar 1100. A coupling hole 322a may be formed in the second portion 322 constituting one end portion of the terminal busbar 320, and the second portion 322 of the terminal busbar 320 may be fixed by a fixing pin 550 inserted into the coupling hole 322a.

In addition, the insulating cover 500 for electrical insulation may be positioned between the busbar frame 300 and the end plate 400. That is, the busbar frame 300, the insulating cover 500, and the end plate 400 may be positioned sequentially from the battery cell stack 100 outward. Like the end plate 400, the busbar frame 300 and the insulating cover 500 may each be configured in plural.

The insulating cover 500 may include an electrically insulating material and may block the busbars 310, 320 from contacting the end plate 400.

The insulating cover 500 may include the opening 510 and the mounting portion 530. The opening 510 may be arranged on each of opposite sides of an upper portion of the insulating cover 500, and one end portion (the second portion 322) of the terminal busbar 320 may be exposed through the opening 510.

In addition, a connector opening may be positioned between the openings 510 located on the opposite sides of the insulating cover 500, and the module connector may be exposed to the outside through the connector opening.

The insulating cover 500 may be positioned on an inner surface of the end plate 400 and may be in close contact with the inner surface of the end plate 400, but this is not necessarily the case.

As described above, one end portion (the second portion 322) of the terminal busbar 320 may be exposed through the opening 510, and the exposed one end portion (the second portion 322) of the terminal busbar 320 may be mounted on the mounting portion 530. Accordingly, the mounting portion 530 may be disposed adjacent to the opening 510 and may be disposed on an upper outer surface.

The mounting portion 530 may allow the second portion 322 of the terminal busbar 320 to be mounted on its upper surface, and thus the upper surface of the mounting portion 530 may form a mounting surface. In addition, as illustrated in FIG. 5, the mounting portion 530 may include a fixing member 531 for fixing the terminal busbar 320.

The fixing member 531 may fix the second portion 322 of the terminal busbar 320 and may include a fixing hole 531a.

A fixing pin (not illustrated) may be inserted into the fixing hole 531a. The fixing pin (not illustrated) inserted into the coupling hole 322a formed in the second portion 322 of the terminal busbar 320 may be fixed by being coupled to the fixing hole 531a, such that the second portion 322 of the terminal busbar 320 may be fixed to the insulating cover 500.

Accordingly, the second portion 322 of the terminal busbar 320 may be mounted on the mounting portion 530 of the insulating cover 500, and the second portion 322 may be mounted on and come into contact with the fixing member 531 disposed at the mounting portion 530.

Furthermore, a terminal cover portion (not illustrated) covering the exposed one end portion (the second portion 322) of the terminal busbar 320 may be disposed on the insulating cover 500.

The end plate 400 may cover an open surface of the module case 200 to protect the battery cell stack 100 and electrical components connected thereto from external physical impact. To this end, the end plate 400 may be manufactured from a material having a predetermined strength, and for example, the end plate 400 may include a metal such as aluminum or a plastic material.

The end plate 400 may be formed with the terminal opening 410. The terminal opening 410 may be arranged on each of opposite sides of the end plate 400, and a portion of the insulating cover 500 and one end portion (the second portion 322) of the terminal busbar 320 may be exposed through the terminal opening 410.

In addition, a connector opening may be positioned between the terminal openings 410 located on the opposite sides of the end plate 400, and the module connector may be exposed to the outside through the connector opening.

The end plate 400 may be coupled to the module case 200 while covering the busbar frame 300 or the busbars 310, 320 located on one surface of the battery cell stack 100. Each corner of the end plate 400 may be coupled to a corresponding corner of the module case 200 by a method such as welding, bolting, or hook coupling.

The end plate 400 may be positioned on one surface and another surface of the module case 200 to cover opposite sides of the battery cell stack 100. In this aspect, an example is illustrated where the end plate 400 is positioned on a front surface and a rear surface of the module case 200.

In addition, as illustrated in FIGS. 5 to 8, in an aspect of the present disclosure, a heat-resistant paint or flame-retardant paint 412 may be applied to at least a portion of the end plate 400. Accordingly, the end plate 400 may include a flame-retardant coating layer (heat-resistant coating layer) on at least a portion thereof.

The flame-retardant coating layer (heat-resistant coating layer) may be formed by applying the heat-resistant paint or flame-retardant paint 412 to the end plate 400. The heat-resistant paint or flame-retardant paint 412 (indicated in gray in the drawings) may be applied to a peripheral area 411 of the terminal opening 410 as illustrated in FIGS. 6 and 7, and thus the flame-retardant coating layer (heat-resistant coating layer) may be formed in the peripheral area 411 of the terminal opening 410. The heat-resistant paint or flame-retardant paint 412 may be applied to an entire edge along a perimeter of the terminal opening 410. For example, the peripheral area 411 of the terminal opening 410 where the flame-retardant coating layer (heat-resistant coating layer) is formed may be within 10 mm, or within 5 mm, from the terminal opening 410.

The flame-retardant coating layer (heat-resistant coating layer) may be disposed on the front portion 420 of the end plate 400, and the front portion 420 may include an upper vertical surface portion 412a, a horizontal surface portion 412b, and a lower vertical surface portion 412c from top to bottom.

The flame-retardant coating layer (heat-resistant coating layer) may be formed on the upper vertical surface portion 412a, the horizontal surface portion 412b, and an upper edge 412d of the lower vertical surface portion 412c in the front portion 420.

In the front portion 420, the upper vertical surface portion 412a may be disposed at an upper portion of the front portion 420 and may extend vertically in the height direction (Z-axis direction) of the battery module 1000. The flame-retardant coating layer (heat-resistant coating layer) may be formed over an entire portion of the upper vertical surface portion 412a in the front portion 420.

The horizontal surface portion 412b may be bent outwardly in the longitudinal direction (Y-axis direction) of the battery module 1000 from a lower end of the upper vertical surface portion 412a to extend horizontally and may be disposed between the upper vertical surface portion 412a and the lower vertical surface portion 412c. The flame-retardant coating layer (heat-resistant coating layer) may be formed over an entire portion of the horizontal surface portion 412b.

In the front portion 420, the lower vertical surface portion 412c may be disposed at a lower portion of the front portion 420, and may be bent downward from a front end of the horizontal surface portion 412b to extend vertically in the height direction (Z-axis direction) of the battery module 1000. The flame-retardant coating layer (heat-resistant coating layer) may be formed on the upper edge 412d of the lower vertical surface portion 412c, and a width of the upper edge 412d on which the flame-retardant coating layer (heat-resistant coating layer) is formed may be within 5 mm.

In addition, as illustrated in FIG. 8, the heat-resistant paint or flame-retardant paint 412 may be applied not only to the peripheral area 411 of the terminal opening 410, but also to an entire portion of the front portion 420 of the end plate 400.

The end plate 400 may include the front portion 420 that is exposed to an outside of the module 1000 (or the module case 200) and a rear portion 430 that faces toward an inside of the module 1000 (or the module case 200).

In the end plate 400, the front portion 420 which is a portion facing toward the outside of the module 1000 (or the module case 200) may correspond to an outer surface of the end plate 400, and the front portion 420 includes the upper vertical surface portion 412a, the horizontal surface portion 412b, and the lower vertical surface portion 412c from top to bottom.

In the end plate 400, the rear portion 430 which is a portion facing toward the inside of the module 1000 (or the module case 200) may correspond to an inner surface of the end plate 400 and may correspond to an opposite surface of the front portion 420.

The rear portion 430 may face the module case 200 or the insulating cover 500 and may be coupled to the module case 200.

Herein, as in FIG. 8, the heat-resistant paint or flame-retardant paint 412 may be applied to the front portion 420 except for the rear portion 430 facing the insulating cover 500.

In this aspect, the heat-resistant paint or flame-retardant paint 412 may be a silicone-based or epoxy-based paint.

When a thermal runaway occurs in a battery pack, gas and particles generated from the battery module may cause an external short circuit of an adjacent module, accelerating a heat transfer speed.

In particular, in the end plate 400, the terminal busbar 320 is exposed in an area of the terminal opening 410, and gas and particles may be discharged through the terminal opening 410 in case of fire.

In this aspect, as described above, the heat-resistant paint or flame-retardant paint 412 may be applied to the peripheral area of the terminal opening 410 or the front portion 420 of the end plate 400, thereby delaying or preventing occurrence of an external short circuit of the adjacent module 1000 and delaying thermal runaway.

In this aspect, the end plate 400 may be manufactured sequentially through die casting, shot blasting, painting, processing, and washing.

First, in the die casting, a molten metal may be injected into a mold to obtain a shape of the end plate 400, and for example, molten aluminum may be injected into the mold to obtain the shape of the end plate 400.

The shape of the end plate 400 obtained after die casting may be subjected to shot blasting. The shot blasting is to remove foreign substances such as sand remaining on a surface of the end plate 400 obtained after die casting, and foreign substances may be removed by projecting fine particles of metal or non-metal to the end plate 400.

After the shot blasting, painting may be performed.

In the painting, as described above, the heat-resistant paint or flame-retardant paint 412 may be applied to the peripheral area 411 of the terminal opening 410 or the entire front portion 420 of the end plate 400.

Then, the manufacturing of the end plate 400 may be completed through processing and washing steps.

The following [Table 1] shows results of an insulation evaluation test of the end plate 400 according to a preferred aspect of the present disclosure.

As shown in [Table 1], in the insulation evaluation test, no leakage current was detected at both voltages of 0.5 kV and 1 kV, indicating that it passed OK.

**[Table 1]**

| Test condition | | Sample No. | | | | | |
|---|---|---|---|---|---|---|---|
| Test result | Voltage | 1 | 2 | 3 | 4 | 5 | 6 |
| | 0.5kV | OK | OK | OK | OK | OK | OK |
| | 1kV | OK | OK | OK | OK | OK | OK |

As described above, one or more battery modules 1000 according to the present disclosure may form a battery pack, and electrical connection between the battery modules 1000 may be made through an inter-busbar (not illustrated). The inter-busbar may be a member for connecting one battery module 1000 to another adjacent battery module 1000 or a BDU (Battery Disconnect Unit) and may be connected to the exposed one end portion (the second portion 322) of the terminal busbar 320. For example, the inter-busbar may overlap and be connected to an upper portion of one end portion (the second portion 322) of the terminal busbar 320.

After one end portion of the inter-busbar is disposed to overlap on the second portion 322 of the terminal busbar 320, a fixing pin is sequentially inserted into a coupling hole of the inter-busbar and the coupling hole 322a of the second portion 322 in the terminal busbar 320, and then the fixing pin is fixed to the fixing hole 531a of the mounting portion 530 to connect the inter-busbar to the terminal busbar 320.

In addition, the second portion 322 of the terminal busbar 320 together with the inter-busbar may be fixed to the insulating cover 500 by the fixing pin.

The battery pack according to the present disclosure may accommodate at least one or more battery modules 1000 inside a pack case, and may include various control and protection systems such as a BMS (Battery Management System), a cooling system, and the like.

The battery module 1000 and the battery pack according to the present disclosure configured as described above may be applied to various devices. Specifically, it may be applied to means of transportation such as electric bicycles, electric vehicles, and hybrid vehicles, or ESS (Energy Storage System), but the various devices are not limited thereto, and it may be applied to various devices that may use secondary batteries.

The present disclosure has been described with reference to preferred aspects as described above, but the present disclosure is not limited to the above aspects, and various changes and modifications may be made by those skilled in the art within the scope that does not depart from the spirit of the present disclosure.

### [INDUSTRIAL APPLICABILITY]

The present disclosure may provide a battery module and a battery pack in which occurrence of an external short circuit in an adjacent module due to gas and particles generated in the battery module during thermal runaway may be delayed or prevented, thereby delaying thermal runaway.

## Claims

1. A battery module for delaying a thermal runaway, comprising:
a battery cell stack including a plurality of battery cells in a stacked state;
a module case configured to accommodate the battery cell stack; and
an end plate disposed on one side of the module case,
wherein a flame-retardant paint is disposed on at least a portion of the end plate.

2. The battery module according to claim 1,
wherein the end plate comprises a terminal opening.

3. The battery module according to claim 2,
wherein the flame-retardant paint is disposed around the terminal opening of the end plate.

4. The battery module according to claim 3, further comprising a terminal busbar,
wherein the terminal opening of the end plate allows one end portion of the terminal busbar to be exposed therethrough.

5. The battery module according to claim 4, further comprising a busbar frame disposed on one side of the battery cell stack.

6. The battery module according to claim 5,
wherein the terminal busbar is disposed on the busbar frame.

7. The battery module according to claim 6, further comprising an insulating cover disposed outside of the busbar frame.

8. The battery module according to claim 7,
wherein the insulating cover comprises an opening that allows the terminal busbar to be exposed therethrough.

9. The battery module according to claim 1,
wherein the flame-retardant paint is disposed on a front portion of the end plate.

10. The battery module according to claim 9,
wherein the front portion of the end plate comprises an upper vertical surface portion; a horizontal surface portion; and a lower vertical surface portion,
wherein the horizontal surface portion is bent from the upper vertical surface portion and extending horizontally away therefrom, and the lower vertical surface portion is bent from a front end of the horizontal surface portion and extending vertically away therefrom, and
wherein the flame-retardant paint is disposed on the upper vertical surface portion and the horizontal surface portion.

11. The battery module according to claim 10,
wherein the flame-retardant paint is disposed on an upper edge of the lower vertical surface portion.

12. The battery module according to claim 11,
wherein a width of the upper edge of the lower vertical surface portion, to which the flame-retardant paint is disposed, is less than or equal to 5 mm.

13. A battery module for delaying a thermal runaway, comprising:
a battery cell stack including a plurality of battery cells in a stacked state;
a module case configured to accommodate the battery cell stack; and
an end plate disposed on one side of the module case,
wherein a heat-resistant paint is disposed on at least a portion of the end plate.

14. The battery module according to claim 13,
wherein the end plate comprises a terminal opening.

15. The battery module according to claim 14,
wherein the heat-resistant paint is disposed around the terminal opening of the end plate.

16. The battery module according to claim 15, further comprising a terminal busbar,
wherein the terminal opening of the end plate allows one end portion of the terminal busbar to be exposed therethrough.

17. The battery module according to claim 16, further comprising a busbar frame disposed on one side of the battery cell stack.

18. The battery module according to claim 17,
wherein the terminal busbar is disposed on the busbar frame.

19. The battery module according to claim 18, further comprising an insulating cover disposed outside of the busbar frame.

20. The battery module according to claim 13,
wherein the heat-resistant paint is disposed on a front portion of the end plate.
